# EUROPEAN PATENT SPECIFICATION

(11) **EP 3 301 965 B1**
(45) Date of publication and mention of the grant of the patent: **16.09.2020**
(21) Application number: 17168155.4
(22) Date of filing: 26.04.2017
(51) Int. Cl.: H04W 24/02, H04W 88/04, H04W 88/08, H04W 92/04

(54) **METHOD AND DEVICE FOR ESTABLISHING BACKHAUL LINK**
VERFAHREN UND VORRICHTUNG ZUR HERSTELLUNG EINER BACKHAUL-VERBINDUNG
PROCÉDÉ ET DISPOSITIF D'ÉTABLISSEMENT DE LIAISON DE RACCORDEMENT

(30) Priority: 29.09.2016 WO PCT/CN2016/100789
(43) Date of publication of application: 04.04.2018
(73) Proprietor: Beijing Xiaomi Mobile Software Co., Ltd., Beijing 100085 (CN)
(72) Inventor: WEI, Na, Beijing, Beijing 100085 (CN); XU, Ran, Beijing, Beijing 100085 (CN)
(74) Representative: dompatent von Kreisler Selting Werner - Partnerschaft von Patent- und Rechtsanwälten mbB

(56) References cited:
- WO-A1-2015/144218
- US-A1- 2014 105 136
- US-A1- 2015 078 167
- US-B1- 8 254 943
- US-B1- 8 913 494

## Description

### TECHNICAL FIELD

The present disclosure generally relates to wireless communications, and more particularly, to a method, a base station, a computer program and a recording medium for establishing a backhaul link.

### BACKGROUND

A backhaul link refers to a communication link between a base station and a core network, and the base station may provide communication service for a terminal within coverage of the base station after accessing the core network through the backhaul link.

With the development of the wireless communication technology, in order to expand communication coverage, deploying base stations on a large scale has become a trend. For each base station, an operating company may usually deploy a fixed backhaul link to the base station, such that the base station may access a core network through the fixed backhaul link, thereby providing communication service for a terminal within the coverage, for example, transmitting data of the core network to the terminal or transmitting data of the terminal to the core network.

Document US 8254943 B1 discloses a method and system for backhaul transport recovery. The method includes broadcasting a backhaul recovery request, and receiving hackhaul recovery responses from at least one wireless device. The method also includes selecting at least one wireless recovery device from the at least one wireless device based upon the backhaul recovery responses, and establishing at least one backhaul recovery channel through the at least one wireless recovery device.

Document US 2014/105136 A1 discloses a system, method and apparatus for enhancing a relay node with additional backhaul alternatives and selection. One system includes a first base station (BS) and backhaul user equipment (bUE) devices that communicate with the first BS through a first communication technology, and communicate with a data network through a second communication technology. A second base station (BS) communicates with the first BS and a second data network. The first BS is operative to communicate with user equipment (UE) devices, and network connect the UE devices to the
data network or the second data network, select the bUE devices or the second BS for backhaul (BH) traffic, aid in selecting the transmission power level of the bUE devices or the UE devices, and transmit resource block (RB) scheduling information for the BH traffic transmission of the bUE devices and access traffic of the UE devices.

### SUMMARY

The present disclosure has solved the afore described problem as defined in the attached claims.

According to a first aspect of embodiments of the present disclosure, a method performed by a base station for establishing a backhaul link is provided, which includes that:
system information is broadcasted to cause a specified terminal, which has established a first communication link with a core network, to receive the system information to return backhaul link establishment signaling;
the backhaul link establishment signaling returned by the specified terminal is received, the backhaul link establishment signaling being configured to indicate that the specified terminal has accessed the core network and may establish a backhaul link for a base station, the backhaul link establishment signaling is a Radio Resource Control, RRC, signaling, an information element of the signaling carriers a backhaul link establishment identifier; and
a confirmation message is sent to the specified terminal to cause the specified terminal to establish a second communication link with the base station after receiving the backhaul link establishment signaling, the second communication link and the first communication link forming the backhaul link, wherein different time resources are configured for a communication link between the base station and any terminal in coverage of the base station and the backhaul link.

The above manner for establishing the backhaul link is more flexible and convenient, any base station may establish multiple backhaul links by adopting the above manner, and strong extensibility is achieved.

In a possible implementation mode, the method may also include that:
under a condition that the base station has established multiple backhaul links, a data packet sent by at least one terminal located in the coverage of the base station is received;
a Quality of service Class Identifier (QCI) of at least one received data packet is acquired, the QCI being configured to indicate a communication priority of a corresponding data packet; and
the at least one data packet is allocated to the multiple backhaul links on the basis of current residual bandwidths of the multiple backhaul links and the QCI of the at least one data packet.

In a possible implementation mode, the method may also include that:
under a condition that the base station has not established any backhaul link yet, if an access request of any terminal is received, the access request is denied.

According to a second aspect of embodiments of the present disclosure, a base station is provided, which includes:
a broadcasting module, configured to broadcast system information to cause a specified terminal, which has established a first communication link with a core network, to receive the system information to return backhaul link establishment signaling;
a receiving module, configured to receive the backhaul link establishment signaling returned by the specified terminal, the backhaul link establishment signaling being configured to indicate that the specified terminal has accessed the core network and may establish a backhaul link for a base station, the backhaul link establishment signaling is a RRC signaling, an information element of the signaling carriers a backhaul link establishment identifier; and
a sending module, configured to send a confirmation message to the specified terminal to cause the specified terminal to establish a second communication link with the base station after receiving the confirmation message, the second communication link and the first communication link forming the backhaul link, wherein different time resources are configured for a communication link between the base station and any terminal in coverage of the base station and the backhaul link.

In a possible implementation mode, the base station may also include:
the receiving module, configured to, under a condition that the base station has established multiple backhaul links, receive a data packet sent by at least one terminal located in the coverage of the base station;
an acquiring module, configured to acquire a QCI of at least one received data packet, the QCI being configured to indicate a communication priority of a corresponding data packet; and
an allocating module, configured to allocate the at least one data packet to the multiple backhaul links on the basis of current residual bandwidths of the multiple backhaul links and the QCI of the at least one data packet.

In a possible implementation mode, the base station may also include:
a denying module, configured to, under a condition that the base station has not established any backhaul link yet, if an access request of any terminal is received, deny the access request.

In one particular embodiment, the steps of the method for establishing a backhaul link are determined by computer program instructions.

Consequently, according to a third aspect, the invention is also directed to a computer program for executing the steps of a method for establishing a backhaul link as described above when this program is executed by a computer.

This program can use any programming language and take the form of source code, object code or a code intermediate between source code and object code, such as a partially complied form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for establishing a backhaul link according to an exemplary embodiment.
Fig. 2 is a flow chart showing a method for establishing a backhaul link, according to an exemplary embodiment.
Fig. 3 is a flow chart showing a method for establishing a backhaul link, according to an exemplary embodiment.
Fig. 4A is a schematic diagram illustrating a communication system, according to an exemplary embodiment.
Fig. 4B is a schematic diagram illustrating a packet recombination process, according to an exemplary embodiment.
Fig. 4C is a schematic diagram illustrating a communication system, according to an exemplary embodiment.
Fig. 4D is a schematic diagram illustrating a communication system, according to an exemplary embodiment.
Fig. 5 is a block diagram of a device for establishing a backhaul link, according to an exemplary embodiment.
Fig. 6 is a block diagram of a device for establishing a backhaul link, according to an exemplary embodiment.
Fig. 7 is a block diagram of a device for establishing a backhaul link, according to an exemplary embodiment.
Fig. 8 is a block diagram of a device for establishing a backhaul link, according to an exemplary embodiment.
Fig. 9 is a block diagram of a device 900 for establishing a backhaul link, according to an exemplary embodiment.
Fig. 10 is a schematic diagram of a structure of a base station according to an exemplary embodiment.

### DETAILED DESCRIPTION

In order to make the technical solutions and advantages of the present disclosure clearer, implementation modes of the present disclosure will be further described below with reference to the accompanying drawings in detail.

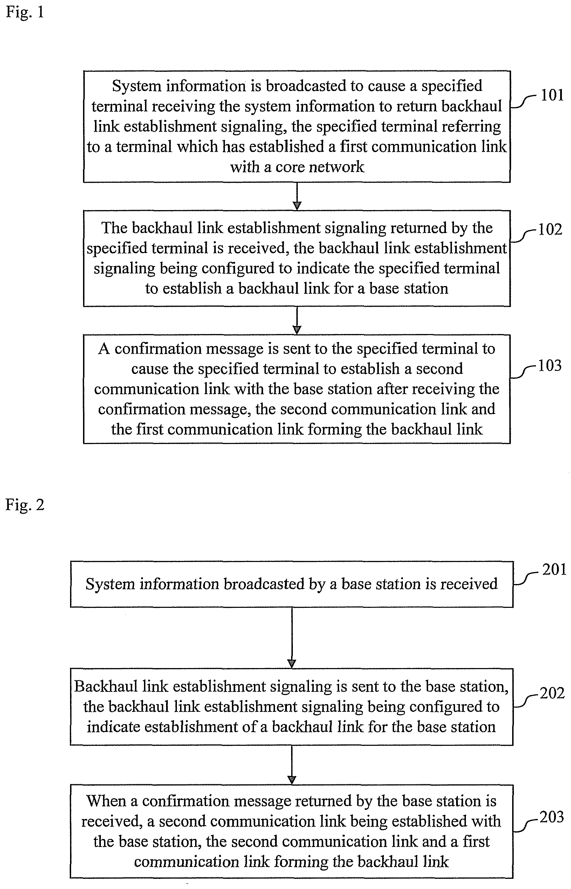

Fig. 1 is a flow chart showing a method for establishing a backhaul link according to an exemplary embodiment. As shown in Fig. 1, the method for establishing the backhaul link is applied to a base station, and includes the following steps.

In Step 101, system information is broadcasted to cause a specified terminal receiving the system information to return backhaul link establishment signaling, the specified terminal referring to a terminal which has established a first communication link with a core network.

In Step 102, the backhaul link establishment signaling returned by the specified terminal is received, the backhaul link establishment signaling being configured to indicate the specified terminal to establish a backhaul link for the base station.

In Step 103, a confirmation message is sent to the specified terminal to cause the specified terminal to establish a second communication link with the base station after receiving the confirmation message, the second communication link and the first communication link forming the backhaul link.

In the related technology, a backhaul link of a mini base station is required to be pre-deployed by an operating company, and the deployed backhaul link is fixed and poor in extensibility. In the embodiments of the present disclosure, the base station may establish a backhaul link through any specified terminal which has established the first communication link with the core network, and the restriction of a fixed backhaul link in the related technology is broken.

According to the method provided by the embodiments, a novel manner for establishing a backhaul link is provided, a second communication link is established between a specified terminal which has established a first communication link with the core network and a base station, the first communication link and the second communication link form the backhaul link, and then the base station may access the core network through the backhaul link. The above manner for establishing the backhaul link is more flexible and convenient, any base station may establish multiple backhaul links by adopting the manner, and strong extensibility is achieved.

In a possible implementation mode, different time resources are configured for a communication link between the base station and any terminal in coverage of the base station and the backhaul link; or,

different frequency resources are configured for the communication link between the base station and any terminal in the coverage of the base station and the backhaul link; or,

spaces occupied by beams corresponding to the communication link between the base station and any terminal in the coverage of the base station and the backhaul link are not overlapped.

In a possible implementation mode, the method further includes that:
under a condition that the base station has established multiple backhaul links, a data packet sent by at least one terminal located in the coverage of the base station is received;
a QCI of the at least one received data packet is acquired, the QCI being configured to indicate a communication priority of the corresponding data packet; and
the at least one data packet is allocated to the multiple backhaul links on the basis of current residual bandwidths of the multiple backhaul links and the QCI of the at least one data packet.

In a possible implementation mode, the method further includes that:
under a condition that the base station has not established any backhaul link yet, if an access request of any terminal is received, the access request is denied.

All of the abovementioned optional technical solutions may be freely combined into optional embodiments of the present disclosure, which will not be elaborated one by one herein.

Fig. 2 is a flow chart showing a method for establishing a backhaul link according to an example. As shown in Fig. 2, the method for establishing a backhaul link is applied to a specified terminal, the specified terminal refers to a terminal which has established a first communication link with a core network, and the method includes the following steps.

In Step 201, system information broadcast by a base station is received.

In Step 202, backhaul link establishment signaling is sent to the base station, the backhaul link establishment signaling being configured to indicate establishment of a backhaul link for the base station.

In Step 203, when a confirmation message returned by the base station is received, a second communication link is established with the base station, the second communication link and a first communication link forming a backhaul link.

According to the method provided by the example, a novel manner for establishing a backhaul link is provided, a second communication link is established between a specified terminal which has established a first communication link with the core network and the base station, the first communication link and the second communication link form the backhaul link, and then the base station may access the core network through the backhaul link. The above manner for establishing a backhaul link is more flexible and convenient, any base station may establish multiple backhaul links by adopting the manner, and strong extensibility is achieved.

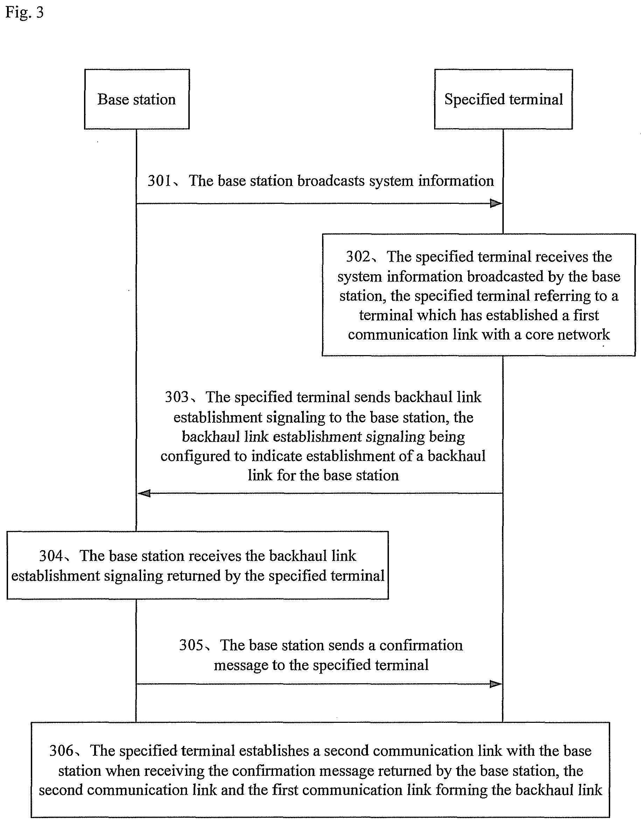

Fig. 3 is a flow chart showing a method for establishing a backhaul link according to an exemplary embodiment. As shown in Fig. 3, the method for establishing a backhaul link is applied to an interaction process between a base station and a specified terminal, and includes the following steps.

In Step 301, a base station broadcasts system information.

A backhaul link refers to a communication link between a base station and a core network, the core network may serve as an interface between the base station and an external network, and the base station may normally provide communication service for a terminal in its coverage only after accessing the core network. For example, the base station transmits data of the core network to a terminal in the coverage, or transmits data of a terminal in the coverage to the core network for transmission to an external network through the core network.

The embodiment of the present disclosure provides a manner for establishing a backhaul link for a base station, and a backhaul link may be established for any base station by the above manner. For example, the base station may be a mini base station, a base station of other type or the like. If an existing backhaul link bandwidth of a mini base station cannot meet a bandwidth requirement, or, if no backhaul link has been deployed for the mini base station, the method of the embodiment of the present disclosure may be adopted to establish the backhaul link. Of course, multiple backhaul links may also be established for the base station by adopting the method of the embodiment of the present disclosure, thereby forming an aggregated backhaul link and enabling the base station to communicate more efficiently.

After being initially started, the base station may broadcast system information for a specified terminal to search and access. The system information is pre-configured information of the base station, which may include basic configuration information of the base station, such as a Master Information Block (MIB) and a System Information Block (SIB). There is no limit made to the system information in the embodiment of the present disclosure.

Different from broadcast of system information after accessing the core network in the related technology, broadcast of the system information is started after initial starting in the embodiment of the present disclosure, so as to establish the backhaul link through the system information.

In Step 302, the specified terminal receives the system information broadcasted by the base station, the specified terminal referring to a terminal which has established a first communication link with the core network.

In Step 303, the specified terminal sends backhaul link establishment signaling to the base station, the backhaul link establishment signaling being configured to indicate establishment of a backhaul link for the base station.

There is no specific limit made to the specified terminal in the embodiment of the present disclosure. For example, the specified terminal may be a mobile phone, tablet computer or the like which has accessed the core network. There is also no limit made to a position of the specified terminal in the embodiment of the present disclosure, just ensuring that the specified terminal may receive the system information broadcasted by the base station.

The backhaul link establishment signaling may be Radio Resource Control (RRC) signaling, an information element of the signaling carriers a backhaul link establishment identifier, and when receiving the signaling sent by the specified terminal, the base station may determine that the signaling is backhaul link establishment signaling on the basis of the backhaul link establishment identifier carried in the signaling. There is no limit made to the information element in the embodiment of the present disclosure. For example, the following information element of the signaling may include the backhaul link establishment identifier "provideBackhaul".

EstablishmentCause ::=ENUMERATED {
emergency, highPriorityAccess, mt-Access, mo-Signalling, mo-Data,
delayTolerantAccess-v1020, **provideBackhaul,** spare1}.

In the process of broadcasting system information by the base station, when receiving the system information broadcasted by the base station, the specified terminal may generate backhaul link establishment signaling and send the backhaul link establishment signaling to the base station to indicate that the specified terminal has accessed the core network and may establish a backhaul link for the base station.

Since the specified terminal has established a first communication link with the core network and may communicate with the core network through the first communication link, the base station may be connected to the core network through the specified terminal as long as a communication link is established between the base station and the specified terminal. In order to establish a communication link between the base station and the specified terminal, the specified terminal sends backhaul link establishment signaling to the base station when receiving the system information broadcasted by the base station.

There is no limit made to the establishment manner of the first communication link in the embodiment of the present disclosure. For example, the specified terminal accesses the core network through a Wireless Local Area Network (WLAN), thereby establishing the first communication link.

It is important to note that there may be multiple specified terminals to receive the system information when the base station broadcasts the system information so as to send backhaul link establishment signaling to the base station, and at this moment, the base station may receive multiple backhaul link establishment signaling, and establish backhaul links according to the received multiple backhaul link establishment signaling. Herein, for different specified terminals, the process of establishing backhaul link is similar, and there is no influence therebetween.

In Step 304, the base station receives backhaul link establishment signaling returned by the specified terminal.

In Step 305, the base station sends a confirmation message to the specified terminal.

In the embodiment of the present disclosure, when the base station receives the backhaul link establishment signaling, the base station may determine that the specified terminal may establish a backhaul link for the base station according to the backhaul link establishment signaling, and at this moment, the base station may send a confirmation message to the specified terminal to indicate that the base station agrees to establish the backhaul link.

In a possible implementation mode of the embodiment of the present disclosure, the base station may judge whether it requires establishment of a backhaul link or not when receiving the backhaul link establishment signaling, and if the base station requires establishment of a backhaul link, the base station sends a confirmation message to the specified terminal; and if the base station does not require establishment of a backhaul link, the base station may send a denial message to the specified terminal.

Herein, conditions under which the base station requires establishment of a backhaul link at least include that: currently there is no available backhaul link, or, a current bandwidth requirement is relatively higher and an existing backhaul link bandwidth may not meet the current bandwidth requirement. Conditions under which the base station does not require establishment of a backhaul link at least include that: currently there is an available backhaul link, or, the existing backhaul link bandwidth may meet the current bandwidth requirement.

It is important to note that: if the base station receives backhaul link establishment signaling from multiple specified terminals, the base station may establish backhaul links through some of the multiple specified terminals, while may not establish backhaul links for the other specified terminals.

In a possible implementation mode, the base station may select specified terminals to establish backhaul links from multiple specified terminals according to the current bandwidth requirement and bandwidth provided by each specified terminal in the multiple specified terminals, to enable a sum of bandwidths provided by the selected specified terminals to meet the current bandwidth requirement of the base station, and the base station may subsequently send confirmation messages to the selected specified terminals and send denial messages to the rest specified terminals.

For example, the base station receives backhaul link establishment signaling sent by 5 specified terminals within a current communication period, and then may send confirmation messages to 3 specified terminals of the 5 specified terminals to establish backhaul links through the 3 specified terminals while send denial messages to the other 2 specified terminals in the next communication period, so that sufficient backhaul links may be established to meet the current bandwidth requirement, and waste of backhaul link resources may also be avoided.

In Step 306, the specified terminal establishes a second communication link with the base station when receiving the confirmation message returned by the base station, the second communication link and the first communication link forming the backhaul link.

On the basis of Step 305, if the specified terminal receives the confirmation message of the base station, at this moment, the base station and the specified terminal have confirmed identities of each other, and both of them agree to establish the backhaul link for the base station through the specified terminal. Therefore, in this step, the specified terminal establishes the second communication link with the base station, and at this moment, the base station may be connected to the core network through the first communication link and the second communication link, that is, the backhaul link is established for the base station.

In the related technology, the operating company deploys the backhaul link for the base station, and the base station implements fixed point transmission through the backhaul link. In the embodiment of the present disclosure, for a base station, the base station may establish a backhaul link through any specified terminal, without any limit of the type and position of the specified terminal, so that flexibility is greatly improved. Moreover, the base station may establish one or more backhaul links, so that a current communication requirement is completely met, and strong extensibility is achieved.

When establishment of a backhaul link is completed, the base station may communicate with the core network through the backhaul link, thereby providing communication service for the terminal in its coverage.

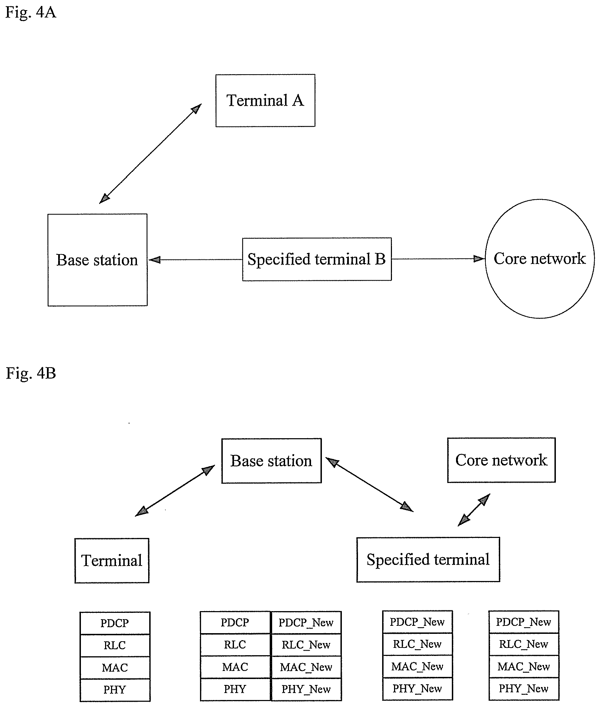

For example, Fig. 4A is a schematic diagram illustrating a communication system according to an example. As shown in Fig. 4A, in the communication system, a terminal A may be any terminal in coverage of a base station. Uplink communication of the communication system is that: the terminal A sends data to the base station, the base station sends the data to a specified terminal B, and the specified terminal B uploads the data to a core network. Downlink communication of the communication system is that: the specified terminal acquires data from the core network, and sends the data to the base station, and the base station sends the data to the terminal A.

During a practical application, the base station may establish one or more backhaul links.

Under the condition that the base station establish only one backhaul link, during uplink communication, a terminal in coverage sends a data packet to the base station, the base station uploads the data packet to the core network through the backhaul link, and specifically, the data packet is sent to the specified terminal through a second communication link, and the specified terminal uploads the data packet to the core network. During downlink communication, the base station acquires a data packet from the core network through the backhaul link, and then sends the data packet to the terminal in the coverage.

Under the condition that the base station establishes multiple backhaul links, during downlink communication, the base station receives data packets on the multiple backhaul links, and sends the received data packets to a terminal in the coverage.

During uplink communication, the base station receives a data packet sent by at least one terminal located in the coverage of the base station, acquires a QCI of the at least one received data packet, and allocates the at least one data packet to the multiple backhauls on the basis of current residual bandwidths of the multiple backhaul links and the QCI of the at least one data packet.

Herein, the QCI is configured to indicate a communication priority of the corresponding data packet, and may be obtained according to a service type, packet loss rate and predicted delay of the data packet. For example, QCIs are divided into 9 classes, and if a QCI of one data packet of two received data packet is class 1 while a QCI of the other data packet is class 7, it is indicated that a communication priority of the former is relatively higher and the former is preferably transmitted.

In a possible implementation mode, the base station may allocate a data packet to a backhaul link with relatively larger current residual bandwidth when receiving the data packet.

For example, the base station has two backhaul links L1 and L2, a current residual bandwidth of L1 is 5M, a current residual bandwidth of L2 is 10M, and then the data packet may be sent through L2.

In such an allocation manner, not only the data packet may be preferably sent; but also the residual bandwidth of the backhaul link is decreased after a bandwidth of the backhaul link is occupied by the data packet, and such that the residual bandwidths of different backhaul links may not have a great difference, so as to ensure load balance of the backhaul links, and alleviate bandwidth stress of the backhaul links.

In another possible implementation mode, when the base station receives multiple data packets, the data packets with relatively higher communication priorities are allocated to the backhaul links with the relatively larger current residual bandwidths, and the data packets with relatively lower communication priorities are allocated to the backhaul links with the relatively smaller current residual bandwidths, so as to ensure that the data packets with the relatively higher communication priorities may be preferably transmitted.

For example, the base station has two backhaul links L1 and L2 and receives two data packets p and y, a QCI of p is class 2, a QCI of y is class 5, it is indicated that a communication priority of p is higher than a communication priority of y, a current residual bandwidth of L1 is 5M, a current residual bandwidth of L2 is 1M, then p is preferably allocated to L1 and y is allocated to L2.

In another possible implantation mode, when receiving data packets of multiple terminals in coverage of a base station, the base station may recombine the multiple received data packets into one data packet on the basis of the current residual bandwidth of at least one backhaul link, and allocate it to any backhaul link.

For example, the base station has two backhaul links L1 and L2, and when the base station receives two data packets, a current residual bandwidth of L1 is 1M, a current residual bandwidth of L2 is 10M, and then the base station may recombine the two data packets into one data packet and allocate it to L2, so that a utilization rate of an idle backhaul link is increased.

There is no limit made to the above packet recombination manner in the embodiment of the present disclosure. For example, Fig. 4B is a schematic diagram illustrating a packet recombination process according to an example. Referring to Fig. 4B, a terminal sends two data packets to the base station, and packet combination is performed on the two data packets sequentially according to an order of a Physical Layer (PHY) protocol, a Medium/Media Access Control (MAC) protocol, a Radio Link Control (RLC) protocol and a Packet Data Convergence Protocol (PDCP). Then the base station depacketizes the two received data packets layer by layer in the sequence of the PDCP, the RLC protocol, the MAC protocol and the PHY protocol respectively to acquire data corresponding to each layer of the two data packets, and combines the data corresponding to the same layer of the two data packets to further obtain a new data packet according to the sequence of the PHY protocol, the MAC protocol, the RCL protocol and the PDDP, and the data of each layer in the new data packet may be represented as PDCP_New, RLC_New, MAC_New and PHY_New.

In another possible implementation mode, during downlink communication, if the base station receives multiple data packets from different backhaul links and the multiple data packets correspond to the same terminal, these data packets may also be recombined into a data packet for sending to the terminal corresponding to the multiple data packets. Such a packet combination manner is similar to the abovementioned packet combination manner, and will not be elaborated herein.

It is important to note that: in order to avoid invalid communication, under the condition that the base station has not established any backhaul link yet, if an access request of any terminal is received, the access request is denied. This is because the system information broadcasted by the base station may be received by any terminal in its coverage and these terminals may send access requests to the base station after receiving the system information. At this moment, if the base station has not established any available backhaul link yet, these terminals may also not transmit data to the core network through the base station or acquire data from the core network through the base station after accessing the base station. Therefore, in order to avoid resource waste, the base station may deny the access request to prevent the terminal from accessing the base station.

On the basis of the backhaul link established in the embodiment, when communicating with any terminal in the coverage of the base station, the base station may also communicate with the core network through the backhaul link. In order to avoid mutual interference of a communication link between the base station and any terminal in the coverage of the base station and the established backhaul link, different transmission resources may be allocated to them, which is not limited in the embodiment of the present disclosure. For example, the transmission resources may be time resources, frequency resources, beams or the like.
1: Different time resources are configured for a communication link between the base station and any terminal in the coverage of the base station and a backhaul link.
   For example, different sub-frames on the base station are allocated to two links respectively. For sub-frame 1 to sub-frame 10, the sub-frames with odd labels are allocated to the communication link between the base station and any terminal in the coverage of the base station, and the sub-frames with even labels are allocated to the backhaul link, so that the above two links perform data transmission in different sub-frames. At this moment, the same frequency resource may be adopted for communication on the two links, so that frequency resources are saved. Moreover, since the sub-frames of the two communication links are isolated from each other, mutual interference during communication is prevented.
2: Different frequency resources are configured for a communication link between the base station and any terminal in the coverage of the base station and a backhaul link.
   For example, different carrier frequencies are adopted by two links respectively. For example, a carrier frequency adopted by a communication link between the base station and any terminal in the coverage of the base station is 2,300MHZ, while a carrier frequency adopted by backhaul link is 2,500MHZ. At this moment, the same time resource may be adopted for communication on the two links. For example, communication is performed on the same sub-frame, so that a communication delay is reduced.
3: Spaces occupied by beams corresponding to a communication link between the base station and any terminal in the coverage of the base station and a backhaul link are not overlapped.

Different beams are different in space directivity, and occupy different spaces, herein the spaces occupied by the beams refer to coverage of the beams. The communication link and the backhaul link may correspond to beams of which occupied spaces are not overlapped. When the base station transmits data through the two links, the beams of which the occupied spaces are not overlapped may be applied, thereby avoiding mutual interference. At this moment, the same time resource and/or frequency resource may be adopted by the communication link and the backhaul link, so that the communication delay may be reduced, the frequency resources may be saved, and communication interference may also be avoided.

Of course, the abovementioned allocation of different transmission resources to two links is exemplary. If multiple backhaul links are established or the base station is required to provide communication service for multiple terminals in the coverage, the abovementioned transmission resource allocation manner may also be adopted to allocate different transmission resources to the multiple backhaul links and communication links between the base station and the multiple terminals in the coverage so as to avoid communication interference.

According to the method provided by the embodiment, a novel manner for establishing a backhaul link is provided, a second communication link is established between a specified terminal which has established a first communication link with the core network and the base station, the first communication link and the second communication link form the backhaul link, and then the base station may access the core network through the backhaul link. The manner for establishing a backhaul link is more flexible and convenient, any base station may establish multiple backhaul links by adopting the above manner, and strong extensibility is achieved.

In addition, the embodiment of the present disclosure supports establishment of multiple backhaul links for the base station, so that one or more backhaul links may be timely and reasonably established for the base station according to a communication demand, that is, an aggregated link of the backhaul links is formed; and therefore, communication efficiency may also be improved while solving the problem of bandwidth limits.

Actually, the embodiment of the present disclosure may be applied to multiple different scenarios.

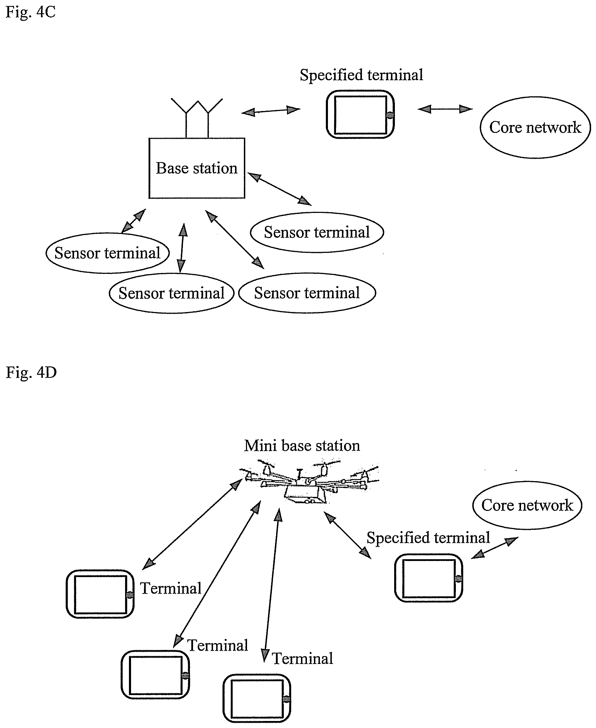

The embodiment of the present disclosure may be applied to a scenario of acquiring data of a sensor. For example, Fig. 4C is a schematic diagram illustrating a communication system according to an exemplary embodiment. Referring to Fig. 4C, a base station, as a control center of a sensor network, may communicate with any sensor terminal in coverage, and may establish a backhaul link through at least one specified terminal.

In the related technology, data acquired by a sensor may be periodically uploaded to a server and may not be uploaded in real time, so that the data acquired by the server may be outdated. While after the backhaul link is established according to the embodiment of the present disclosure, data acquired by the sensor terminal may be uploaded to the core network in real time through the base station and the backhaul link, and may further be uploaded to the server through the core network, so that real-time transmission of the data acquired by a sensor is implemented, and timeliness is guaranteed.

The embodiment of the present disclosure may be applied to a scenario of an unmanned aerial vehicle. For example, Fig. 4D is a schematic diagram illustrating a communication system according to an example. Referring to Fig. 4D, a mini base station is deployed on the unmanned aerial vehicle, and the mini base station may communicate with any terminal in coverage, and may also establish a backhaul link through at least one specified terminal.

In the related technology, a conventional backhaul link is usually fixed, so that it is difficult to implement deployment of a mobile mini base station. The embodiment of the present disclosure solves the problem, that is, deployment of a mini base station on the unmanned aerial vehicle may be implemented, so that the coverage may be adjusted by controlling the movement of the unmanned aerial vehicle, so as to provide communication service for a region lack of infrastructures, or temporarily provide communication service for a region, and higher flexibility is achieved.

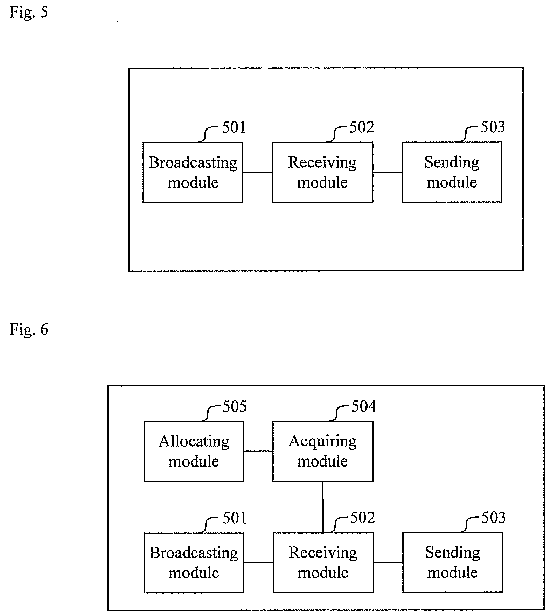

Fig. 5 is a block diagram of a device for establishing a backhaul link according to an exemplary embodiment. Referring to Fig. 5, the device includes a broadcasting module 501, a receiving module 502 and an establishing module 503.

The broadcasting module 501 is configured to broadcast system information to cause a specified terminal receiving the system information to return backhaul link establishment signaling, the specified terminal referring to a terminal which has established a first communication link with a core network;

the receiving module 502 is configured to receive the backhaul link establishment signaling returned by the specified terminal, the backhaul link establishment signaling being configured to indicate the specified terminal to establish a backhaul link for the base station; and

the sending module 503 is configured to send a confirmation message to the specified terminal to cause the specified terminal to establish a second communication link with the base station after receiving the confirmation message, the second communication link and the first communication link forming a backhaul link.

According to the device provided by the embodiment, a novel manner for establishing a backhaul link is provided, a second communication link is established between a specified terminal which has established a first communication link with the core network and the base station, the first communication link and the second communication link form a backhaul link, and then the base station may access the core network through the backhaul link. The above manner for establishing a backhaul link is more flexible and convenient, any base station may establish multiple backhaul links by adopting the above manner, and strong extensibility is achieved.

In a possible implementation mode, different time resources are configured for a communication link between the base station and any terminal in coverage of the base station and a backhaul link; or,

different frequency resources are configured for a communication link between the base station and any terminal in the coverage of the base station and a backhaul link; or,

spaces occupied by beams corresponding to a communication link between the base station and any terminal in the coverage of the base station and a backhaul link are not overlapped.

In a possible implementation mode, on the basis of the device shown in Fig. 5, referring to Fig. 6, the device further includes: an acquiring module 504 and an allocating module 505.

The receiving module 502 is configured to, under the condition that the base station has established multiple backhaul links, receive a data packet sent by at least one terminal located in the coverage of the base station;

the acquiring module 504 is configured to acquire a QCI of the at least one received data packet, the QCI being configured to indicate a communication priority of the corresponding data packet; and

the allocating module 505 is configured to allocate the at least one data packet to multiple backhaul links on the basis of current residual bandwidths of the multiple backhaul links and the QCI of the at least one data packet.

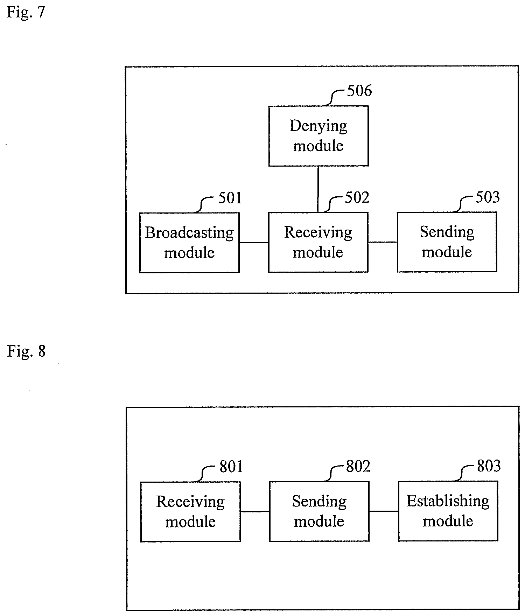

In a possible implementation mode, on the basis of the device shown in Fig. 5, referring to Fig. 7, the device further includes: a denying module 506.

The denying module 506 is configured to, under the condition that the base station has not established any backhaul link yet, if an access request of any terminal is received, deny the access request.

Fig. 8 is a block diagram of a device for establishing a backhaul link according to an example. Referring to Fig. 8, the device is applied to a specified terminal, the specified terminal refers to a terminal which has established a first communication link with a core network, and the device includes a receiving module 801, a sending module 802 and an establishing module 803.

The receiving module 801 is configured to receive system information broadcasted by a base station;
the sending module 802 is configured to send backhaul link establishment signaling to the base station, the backhaul link establishment signaling being configured to indicate establishment of a backhaul link for the base station; and
the establishing module 803 is configured to, when a confirmation message returned by the base station is received, establish a second communication link with the base station, the second communication link and a first communication link forming the backhaul link.

According to the device provided by the example, a novel manner for establishing a backhaul link is provided, a second communication link is established between a specified terminal which has established a first communication link with the core network and the base station, the first communication link and the second communication link form the backhaul link, and then the base station may access the core network through the backhaul link. The above manner for establishing a backhaul link is more flexible and convenient, any base station may establish multiple backhaul links by adopting the above manner, and strong extensibility is achieved.

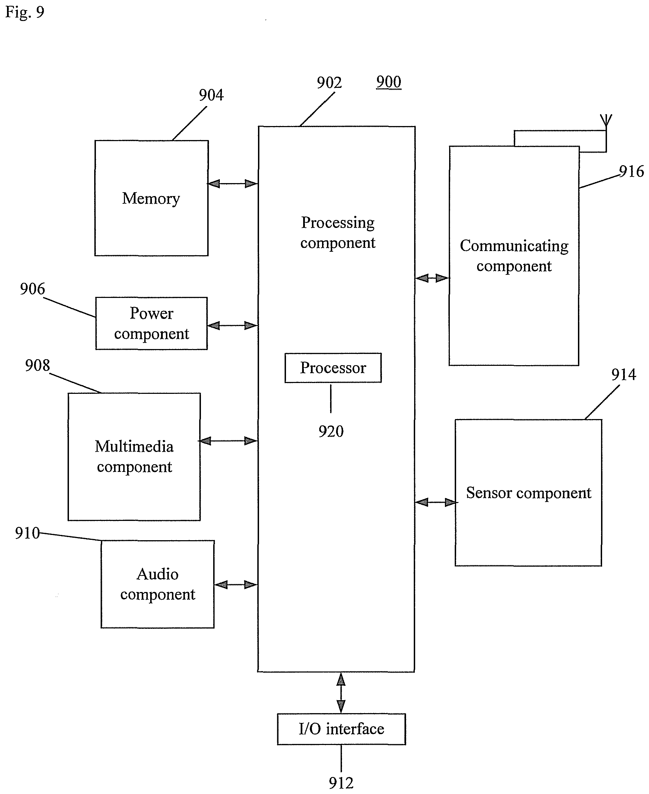

Fig. 9 is a block diagram of a device 900 for establishing a backhaul link according to an example, For example, the device 900 may be a mobile phone, a computer, a digital broadcast terminal, a message transceiving device, a game console, a tablet, a medical device, exercise equipment and a personal digital assistant, etc.

Referring to Fig. 9, the device 900 may include one or more of the following components: a processing component 902, a memory 904, a power component 906, a multimedia component 908, an audio component 910, an Input/Output (I/O) interface 912, a sensor component 914, and a communication component 916.

The processing component 902 typically controls overall operations of the device 900, such as the operations associated with display, telephone calls, data communications, camera operation, and recording operation. The processing component 902 may include one or more processors 920 to execute instructions to perform all or part of steps in the abovementioned method. Moreover, the processing component 902 may include one or more modules which facilitate interaction between the processing component 902 and the other components. For instance, the processing component 902 may include a multimedia module to facilitate interaction between the multimedia component 908 and the processing component 902.

The memory 904 is configured to store various types of data to support the operation of the device 900. Examples of such data include instructions for any application programs or methods operated on the device 900, contact data, phonebook data, messages, pictures, video, etc. The memory 904 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 906 provides power for various components of the device 900. The power component 906 may include a power management system, one or more power supplies, and other components associated with the generation, management and distribution of power for the device 900.

The multimedia component 908 includes a screen providing an output interface between the device 900 and a user. In some examples, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some examples, the multimedia component 908 includes a front camera and/or a rear camera. The front camera and/or the rear camera may receive external multimedia data when the device 900 is in an operation mode, such as a photographing mode or a video mode. Each of the front camera and the rear camera may be a fixed optical lens system or have focusing and optical zooming capabilities.

The audio component 910 is configured to output and/or input an audio signal. For example, the audio component 910 includes a Microphone (MIC), and the MIC is configured to receive an external audio signal when the device 900 is in the operation mode, such as a call mode, a recording mode and a voice recognition mode. The received audio signal may be further stored in the memory 904 or sent through the communication component 916. In some examples, the audio component 910 further includes a speaker configured to output the audio signal.

The I/O interface 912 provides an interface between the processing component 902 and a peripheral interface module, and the peripheral interface module may be a keyboard, a click wheel, a button and the like. The button may include, but not limited to: a home button, a volume button, a starting button and a locking button.

The sensor component 914 includes one or more sensors configured to provide status assessment in various aspects for the device 900. For instance, the sensor component 914 may detect an on/off status of the device 900 and relative positioning of components, such as a display and small keyboard of the device 900, and the sensor component 914 may further detect a change in a position of the device 900 or a component of the device 900, presence or absence of contact between the user and the device 900, orientation or acceleration/deceleration of the device 900 and a change in temperature of the device 900. The sensor component 914 may include a proximity sensor configured to detect presence of an object nearby without any physical contact. The sensor component 914 may also include a light sensor, such as a Complementary Metal Oxide Semiconductor (CMOS) or Charge Coupled Device (CCD) image sensor, configured for use in an imaging application. In some examples, the sensor component 914 may further include an acceleration sensor, a gyroscope sensor, a magnetic sensor, a pressure sensor or a temperature sensor.

The communication component 916 is configured to facilitate wired or wireless communication between the device 900 and another device. The device 900 may access a communication-standard-based wireless network, such as a Wireless Fidelity (Wi-Fi) network, a 2nd-Generation (2G) or 3rd-Generation (3G) network or a combination thereof. In an example, the communicating component 916 receives a broadcast signal or broadcast associated information from an external broadcast management system through a broadcast channel. In an example, the communication component 916 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and other technology.

In an example, the device 900 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method for establishing a backhual link:

system information broadcasted by a base station is received; backhaul link establishment signaling is sent to the base station, the backhaul link establishment signaling being configured to indicate establishment of a backhaul link for the base station; and when a confirmation message returned by the base station is received, a second communication link is established with the base station, the second communication link and a first communication link forming the backhaul link.

In an exemplary embodiment, there is also provided a non-transitory computer-readable storage medium including an instruction, such as the memory 904 including an instruction, and the instruction may be executed by the processor 920 of the device 900 to implement the abovementioned method. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

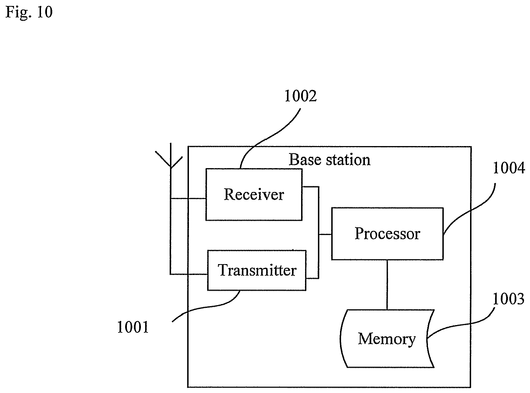

Fig. 10 is a structure diagram of a base station according to an exemplary embodiment. As shown in Fig. 10, the base station includes a transmitter 1001, a receiver 1002, a memory 1003 and a processor 1004 connected with the transmitter, the receiver and the memory respectively. Of course, the base station may further include a universal part such as an antenna, a baseband processing part, an intermediate-radio frequency processing part and an I/O device, which is not limited in the embodiment of the present disclosure.

The processor is configured to execute a method in any possible implementation mode provided by the abovementioned embodiments.

## Claims

1. A method for establishing a backhaul link, performed by a base station, the method comprising:
broadcasting (101) system information to cause a specified terminal, which has established a first communication link with a core network, to receive the system information to return backhaul link establishment signaling; receiving (102) the backhaul link establishment signaling returned by the specified terminal, the backhaul link establishment signaling being configured to indicate that the specified terminal has accessed the core network and may establish a backhaul link for the base station, the backhaul link establishment signaling being a Radio Resource Control, RRC, signaling, an information element of the signaling carrying a backhaul link establishment identifier; and
sending (103) a confirmation message to the specified terminal to cause the specified terminal to establish a second communication link with the base station after receiving the backhaul link establishment signaling, the second communication link and the first communication link forming the backhaul link;
wherein different time resources are configured for a communication link between the base station and any terminal in coverage of the base station and the backhaul link.

2. The method according to claim 1, further comprising:
under a condition that the base station has established multiple backhaul links, receiving a data packet sent by at least one terminal located in the coverage of the base station;
acquiring a Quality of service Class Identifier, QCI, of at least one received data packet, the QCI being configured to indicate a communication priority of a corresponding data packet; and
allocating the at least one data packet to the multiple backhaul links on the basis of current residual bandwidths of the multiple backhaul links and the QCI of the at least one data packet.

3. The method according to claim 1, further comprising:
under a condition that the base station has not established any backhaul link yet, if an access request of any terminal is received, denying the access request.

4. Abase station, comprising:
a broadcasting module (501), configured to broadcast system information to cause a specified terminal, which has established a first communication link with a core network, to receive the system information to return backhaul link establishment signaling;
a receiving module (502), configured to receive the backhaul link establishment signaling returned by the specified terminal, the backhaul link establishment signaling being configured to indicate that the specified terminal has accessed the core network and may establish a backhaul link for the base station, the backhaul link establishment signaling being a Radio Resource Control, RRC, signaling, an information element of the signaling carrying a backhaul link establishment identifier; and
a sending module (503), configured to send a confirmation message to the specified terminal to cause the specified terminal to establish a second communication link with the base station after receiving the backhaul link establishment signaling the second communication link and the first communication link forming the backhaul link;
wherein different time resources are configured for a communication link between the base station and any terminal in coverage of the base station and the backhaul link.

5. The base station according to claim 4, further comprising:
the receiving module (502), configured to, under a condition that the base station has established multiple backhaul links, receive a data packet sent by at least one terminal located in the coverage of the base station;
an acquiring module (504), configured to acquire a Quality of service Class Identifier, QCI, of at least one received data packet, the QCI being configured to indicate a communication priority of a corresponding data packet; and
an allocating module (505), configured to allocate at least one data packet to the multiple backhaul links on the basis of current residual bandwidths of the multiple backhaul links and the QCI of the at least one data packet; and/or
a denying module (506), configured to, under a condition that the base station has not established any backhaul link yet, if an access request of any terminal is received, deny the access request.

6. A computer program including instructions which, when executed by a computer of a base station, make the base station carry out the steps of a method for establishing a backhaul link according to any one of claims 1 to 3.

7. A recording medium readable by a computer and having recorded thereon a computer program including instructions which, when executed by a computer of a base station, make the base station carry out the steps of a method for establishing a backhaul link according to any one of claims 1 to 3.

## Patentansprüche

1. Verfahren zum Herstellen einer Backhaul-Verbindung, durchgeführt von einer Basisstation, wobei das Verfahren die folgenden Schritte aufweist:
Senden (101) von Systeminformationen, um ein spezifiziertes Terminal, das eine erste Kommunikationsverbindung mit einem Kernnetzwerk hergestellt hat, zu veranlassen, die Systeminformationen zu empfangen, um Backhaul-Verbindungsherstellungssignale zurückzusenden,
Empfangen (102) der von dem spezifizierten Terminal zurückgesendeten Backhaul-Verbindungsherstellungssignale, wobei die Backhaul-Verbindungsherstellungssignale dazu ausgebildet sind, anzugeben, dass das spezifizierte Terminal auf das Kernnetzwerk zugegriffen hat und eine Backhaul-Verbindung für die Basisstation herstellen kann, wobei es sich bei den Backhaul-Verbindungsherstellungssignalen um Radio-Resource-Control-Signale, RRC, handelt, wobei ein Informationselement der Signale eine Backhaul-Verbindungsherstellungsidentifikator aufweist, und
Senden (103) einer Bestätigungsnachricht an das spezifizierte Terminal, um das spezifizierte Terminal zu veranlassen, nach dem Empfang der Backhaul-Verbindungsherstellungssignale eine zweite Kommunikationsverbindung mit der Basisstation herzustellen, wobei die zweite Kommunikationsverbindung und die erste Kommunikationsverbindung die Backhaul-Verbindung bilden;
wobei verschiedene Zeitressourcen für eine Kommunikationsverbindung zwischen der Basisstation und einem beliebigen Terminal in Reichweite der Basisstation und der Backhaul-Verbindung konfiguriert werden.

2. Verfahren nach Anspruch 1, ferner folgende Schritte aufweisend:
unter der Bedingung, dass die Basisstation mehrere Backhaul-Verbindungen hergestellt hat, Empfangen eines Datenpakets, das von mindestens einem Terminal gesendet wird, das sich in Reichweite der Basisstation befindet;
Erfassen eines Dienstgüteklassenidentifikators, QCI, mindestens eines empfangenen Datenpakets, wobei der QCI dazu ausgebildet ist, eine Kommunikationspriorität eines entsprechenden Datenpakets anzugeben, und
Zuordnen des mindestens einen Datenpakets zu den mehreren Backhaul-Verbindungen auf der Basis gegenwärtiger verbleibender Bandbreiten der mehreren Backhaul-Verbindungen und des QCI des mindestens einen Datenpakets.

3. Verfahren nach Anspruch 1, ferner aufweisend: unter der Bedingung, dass die Basisstation noch keinerlei Backhaul-Verbindung hergestellt hat, Zurückweisen einer Zugangsanfrage, wenn eine Zugangsanfrage eines beliebigen Terminals empfangen wird.

4. Basisstation aufweisend:
ein Übertragungsmodul (501), das dazu ausgebildet ist, Systeminformationen zu übertragen, um ein spezifiziertes Terminal, das eine erste Kommunikationsverbindung mit einem Kernnetzwerk hergestellt hat, zu veranlassen, die Systeminformationen zu empfangen, um Backhaul-Verbindungsherstellungssignale zurückzusenden,
einem Empfangsmodul (502), das dazu ausgebildet ist, die von dem spezifizierten Terminal zurückgesendeten Backhaul-Verbindungsherstellungssignale zu empfangen, wobei die Backhaul-Verbindungsherstellungssignale dazu ausgebildet sind, anzugeben, dass das spezifizierte Terminal auf das Kernnetzwerk zugegriffen hat und eine Backhaul-Verbindung für die Basisstation herstellen kann, wobei es sich bei den Backhaul-Verbindungsherstellungssignalen um Radio-Resource-Control-Signale, RRC, handelt, wobei ein Informationselement der Signale eine Backhaul-Verbindungsherstellungsidentifikator aufweist, und
einem Sendemodul (503), das dazu ausgebildet ist, eine Bestätigungsnachricht an das spezifizierte Terminal zu senden, um das spezifizierte Terminal zu veranlassen, nach dem Empfang der Backhaul-Verbindungsherstellungssignale eine zweite Kommunikationsverbindung mit der Basisstation herzustellen, wobei die zweite Kommunikationsverbindung und die erste Kommunikationsverbindung die Backhaul-Verbindung bilden;
wobei verschiedene Zeitressourcen für eine Kommunikationsverbindung zwischen der Basisstation und einem beliebigen Terminal in Reichweite der Basisstation und der Backhaul-Verbindung konfiguriert sind.

5. Basisstation nach Anspruch 4, ferner aufweisend:
das Empfangsmodul (502), das dazu ausgebildet ist, unter der Bedingung, dass die Basisstation mehrere Backhaul-Verbindungen hergestellt hat, ein Datenpaket zu empfangen, das von mindestens einem Terminal gesendet wird, das sich in Reichweite der Basisstation befindet;
einem Erfassungsmodul (504), das dazu ausgebildet ist, einen Dienstgüteklassenidentifikator, QCI, mindestens eines empfangenen Datenpakets zu erfassen, wobei der QCI dazu ausgebildet ist, eine Kommunikationspriorität eines entsprechenden Datenpakets anzugeben, und
einem Zuordnungsmodul (505), das dazu ausgebildet ist, mindestens ein Datenpaket zu den mehreren Backhaul-Verbindungen auf der Basis gegenwärtiger verbleibender Bandbreiten der mehreren Backhaul-Verbindungen und des QCI des mindestens einen Datenpakets zuzuordnen, und/oder
einem Zurückweisungsmodul (506), das dazu ausgebildet ist, unter der Bedingung, dass die Basisstation noch keinerlei Backhaul-Verbindung hergestellt hat, eine Zugangsanfrage zurückzuweisen, wenn eine Zugangsanfrage eines beliebigen Terminals empfangen wird.

6. Computerprogramm, welches Befehle aufweist, welche bei der Ausführung durch einen Computer einer Basisstation die Basisstation veranlasst, die Schritte eines Verfahrens zum Herstellen einer Backhaul-Verbindung nach einem der Ansprüche 1 bis 3 durchzuführen.

7. Aufzeichnungsmedium, welches von einem Computer lesbar ist und auf welchem ein Computerprogramm aufgezeichnet ist, welches Befehle aufweist, welche bei der Ausführung durch einen Computer einer Basisstation die Basisstation veranlasst, die Schritte eines Verfahrens zum Herstellen einer Backhaul-Verbindung nach einem der Ansprüche 1 bis 3 durchzuführen.

## Revendications

1. Procédé pour établir une liaison de collecte réalisée par une station de base, le procédé comprenant le fait de:
diffuser (101) des informations de système pour amener un terminal spécifié qui a établi une première liaison de communication avec un réseau central à recevoir les informations de système pour retourner une signalisation d'établissement de liaison de collecte;
recevoir (102) la signalisation d'établissement de liaison de collecte retournée par le terminal spécifié, la signalisation d'établissement de liaison de collecte étant configurée pour indiquer que le terminal spécifié a accédé au réseau central et peut établir une liaison de collecte pour la station de base, la signalisation d'établissement de liaison de collecte étant une signalisation de Contrôle de Ressources Radio, RRC, un élément d'information de la signalisation portant un identificateur d'établissement de liaison de collecte; et
envoyer (103) un message de confirmation au terminal spécifié pour amener le terminal spécifié à établir une deuxième liaison de communication avec la station de base après avoir reçu la signalisation d'établissement de liaison de collecte, la deuxième liaison de communication et la première liaison de communication formant la liaison de collecte;
dans lequel différentes ressources temporelles sont configurées pour une liaison de communication entre la station de base et tout terminal sous la couverture de la station de base et la liaison de collecte.

2. Procédé selon la revendication 1, comprenant par ailleurs le fait de:
à condition que la station de base ait établi plusieurs liaisons de collecte, recevoir un paquet de données envoyé par au moins un terminal se trouvant sous la couverture de la station de base;
acquérir un Identificateur de Qualité de Classe de service, QCI, d'au moins un paquet de données reçu, le QCI étant configuré pour indiquer une priorité de communication d'un paquet de données correspondant;
et
attribuer l'au moins un paquet de données aux multiples liaisons de collecte sur base des largeurs de bande résiduelles actuelles des multiples liaisons de collecte et du QCI de l'au moins un paquet de données.

3. Procédé selon la revendication 1, comprenant par ailleurs le fait de:
à condition que la station de base n'ait pas encore établi de liaison de collecte, si une demande d'accès est reçue de tout terminal, refuser la demande d'accès.

4. Station de base, comprenant:
un module de diffusion (501), configuré pour diffuser des informations de système pour amener un terminal spécifié qui a établi une première liaison de communication avec un réseau central à recevoir les informations de système pour retourner une signalisation d'établissement de liaison de collecte;
un module de réception (502) configuré pour recevoir la signalisation d'établissement de liaison de collecte retournée par le terminal spécifié, la signalisation d'établissement de liaison de collecte étant configurée pour indiquer que le terminal spécifié a accédé au réseau central et peut établir une liaison de collecte pour la station de base, la signalisation d'établissement de liaison de collecte est une signalisation de Contrôle des Ressources Radio, RRC, un élément d'information de la signalisation portant un identificateur d'établissement de liaison de collecte; et
un module d'envoi (503) configuré pour envoyer un message de confirmation au terminal spécifié pour amener le terminal spécifié à établir une deuxième liaison de communication avec la station de base après avoir reçu la signalisation d'établissement de liaison de collecte, la deuxième liaison de communication et la première liaison de communication formant la liaison de collecte;
dans lequel différentes ressources temporelles sont configurées pour une liaison de communication entre la station de base et tout terminal sous la couverture de la station de base et la liaison de collecte.

5. Station de base selon la revendication 4, comprenant par ailleurs:
le module de réception (502) configuré pour recevoir, à condition que la station de base ait établi de multiples liaisons de collecte, un paquet de données envoyé par au moins un terminal se trouvant sous la couverture de la station de base;
un module d'acquisition (504) configuré pour acquérir un Identificateur de Qualité de Classe de service, QCI, d'au moins un paquet de données reçu, le QCI étant configuré pour indiquer une priorité de communication d'un paquet de données correspondant; et
un module d'attribution (505) configuré pour attribuer au moins un paquet de données aux multiples liaisons de collecte sur base des largeurs de bande résiduelles actuelles des multiples liaisons de collecte et du QCI de l'au moins un paquet de données; et/ou un module de refus (506) configuré pour refuser, à condition que la station de base n'ait pas encore établi de liaison de collecte, si une demande d'accès est reçue de tout terminal, la demande d'accès.

6. Programme d'ordinateur comportant des instructions qui, lorsqu'elles sont exécutées par un ordinateur d'une station de base, font que la station de base réalise les étapes d'un procédé pour établir une liaison de collecte selon l'une quelconque des revendications 1 à 3.

7. Support d'enregistrement lisible par un ordinateur et présentant, y enregistré, un programme d'ordinateur comportant des instructions qui, lorsqu'elles sont exécutées par un ordinateur d'une station de base, font que la station de base réalise les étapes d'un procédé pour établir une liaison de collecte selon l'une quelconque des revendications 1 à 3.
